# DEMANDE DE BREVET EUROPEEN

(11) **EP 4 667 277 A1**
(43) Date de publication de la demande: **24.12.2025**
(21) Numéro de dépôt: 25184041.9
(22) Date de dépôt: 19.06.2025
(51) Int. Cl.: B60L 50/20, B60L 53/16, B60L 53/31

(54) **ENSEMBLE CYCLE ÉLECTRIQUE ET BORNE DE RECHARGE**

(30) Priorité: 21.06.2024 FR 2406728
(71) Demandeur: B2eBike, 69009 Lyon (FR)
(72) Inventeur: PRAQUIN, Gaël, 69670 VAUGNERAY (FR); MAYER, Etienne, 69100 VILLEURBANNE (FR)
(74) Mandataire: Ipsilon

(57) **Abrégé**

L'invention se rapporte à un cycle électrique (10), présentant un cadre (1) et une prise électrique (15) pour la recharge d'une batterie, et une borne de recharge (20) du cycle électrique (10) associée, ancrée et alimentée en courant électrique, présentant une fiche (31) complémentaire de la prise électrique (15) du cycle électrique (10), insérable dans ladite prise électrique (15),
caractérisé en ce que :
- le cadre (1) comporte une extrémité (11) rectiligne portant la prise (15), avec, sur des faces latérales de l'extrémité (11) des rails rectilignes (13),
- la borne de recharge (20) comporte un logement (27) configuré pour accueillir l'extrémité (11) du cadre (1), présentant des rainures (29) dans lesquels viennent s'insérer les rails rectilignes (13) du cadre (1), et des moyens de blocage en translation (19, 35) de l'extrémité (11) dans la borne de recharge (20) lorsqu'elle est insérée dans le logement (27).

## Description

### Domaine technique

La présente invention se rapporte au domaine des cycles électriques et leurs bornes de recharge, notamment dans le cadre de cycles en libre-service ou cyclopartage et en particulier de vélos en libre-service ou vélopartage.

### Techniques antérieures

Les vélos en libre-service sont associés à des bornes ancrées au sol ou à un mur, qui rechargent et immobilisent les vélos entre deux utilisations. Les vélos sont généralement attachés à la borne par leur cadre à l'avant du vélo, leur roue avant ou leur guidon. Des contacts électriques sont connectés lorsque le vélo vient s'attacher à la borne, ce qui recharge alors la batterie du vélo en attendant un utilisateur.

Les vélos en libre-service sont soumis à des dégradations volontaires de passants qui peuvent parfois faire preuve d'une force et d'une détermination surprenante pour parvenir à dégrader les vélos et les bornes. Parfois, ces dégradations ont pour but de libérer le vélo de la borne afin de s'en servir sans payer, ou bien pour le jeter dans un fleuve, une rivière ou autre.

Le déposant a toutefois remarqué que les dégradations sont souvent gratuites avec pour seul but de détruire le vélo et la borne.

Notamment, des passants se mettent parfois à plusieurs et soulèvent avec force l'arrière du vélo, le vrillent ou le tordent dans le plan horizontal. Le vélo étant attaché à la borne au niveau de son extrémité avant à la borne, il se forme un bras de levier qui est généralement assez important pour aboutir à un arrachage du vélo de la borne, avec arrachage des contacts électriques, ou bien à une déformation voire rupture du cadre du vélo, de la roue ou du guidon.

Ces dégradations nuisent à la rentabilité des services de vélopartage ou cyclopartage, et rendent indisponibles les vélos et bornes détruits alors que la densité de présence de ceux-ci détermine l'efficacité du service de vélopartage et ainsi sa rentabilité.

Le document KR20210144966 décrit des cycles et stations de charge utilisant une extrémité avant d'un cadre du cycle comme connecteur électrique et mécanique.

Le cadre du cycle est cependant circulaire, et seule une portion extrémale courte dudit cadre est insérée dans le connecteur, avec des ailettes déformables formant guide à l'insertion.

La connexion mécanique entre ces cycles et stations de charge demeure peu solide, notamment lorsque l'arrière du cycle est soulevé, vrillé ou tordu comme précédemment expliqué.

### Exposé de l'invention

Pour répondre à ce problème, l'invention propose un ensemble cycle électrique et borne de recharge, comportant :
- un cycle électrique, présentant un cadre et une prise électrique pour la recharge d'une batterie,
- une borne de recharge du cycle électrique, ancrée et alimentée en courant électrique, présentant une fiche complémentaire de la prise électrique, insérée dans ladite prise électrique lorsque le cycle électrique est attaché à la borne de recharge. L'ensemble selon l'invention est caractérisé en ce que :
   - le cadre comporte une extrémité rectiligne portant la prise, avec, sur des faces latérales de l'extrémité des rails rectilignes parallèles à un sens d'insertion par translation de l'extrémité dans la borne de recharge, comportant une longueur rectiligne supérieure à 8 cm, de section constante non invariante par rotation, les rails rectilignes venant de matière avec le cadre et présentant une extension radiale supérieure à 8mm et s'étendant sur tout la longueur rectiligne de l'extrémité rectiligne,
   - la borne de recharge comporte un logement configuré pour accueillir l'extrémité du cadre, présentant des rainures dans lesquels viennent s'insérer les rails rectilignes du cadre, et des moyens de blocage en translation de l'extrémité dans la borne de recharge lorsqu'elle est insérée dans le logement de la borne de recharge pour attache le cycle électrique à la borne de recharge.

Les rails et rainures permettent de répartir les efforts exercés par une force appliquée sur le cycle électrique, utilisant notamment ledit cycle comme bras de levier. En effet, le raccord du cycle à la borne est l'endroit où se concentrent alors les contraintes, avec possibilité d'arrachement, réduite par l'architecture particulière de l'invention.

L'ensemble peut notamment présenter une ou plusieurs des caractéristiques suivantes, prises seules ou en combinaison.

La prise peut comporter un cylindre portant des contacts électriques, et la fiche un logement tubulaire pour le cylindre, le cylindre étant inséré dans le logement tubulaire lors de l'insertion de l'extrémité du cadre dans le logement de la borne de recharge.

Le cylindre peut alors comporter un retrait, et le logement tubulaire un pêne mobile entre une position de verrouillage dans laquelle il entre en prise avec le retrait, et une position de libération dans laquelle il est escamoté, formant moyens de blocage en translation de l'extrémité dans le logement de la borne de recharge.

En effet, le demandeur a constaté que les efforts les plus importants que des passants mal intentionnés peuvent exercer ne sont jamais dans l'axe longitudinal du cycle, mais bien les efforts utilisant la longueur du cycle comme bras de levier. Un simple système pêne-gâche suffit alors pour bloquer la libération du cycle par traction longitudinale.

Le cylindre, le logement tubulaire, les rainures et les rails rectilignes peuvent notamment être sensiblement horizontaux lorsque le cycle électrique est disposé sur un sol plat.

La connexion du cycle à la borne de recharge se fait alors simplement en faisant avancer le cycle jusqu'à l'insertion de l'extrémité dans son logement, sans avoir à le soulever.

Le cadre et la borne de recharge peuvent comporter des moyens de détection d'insertion complète de l'extrémité du cadre dans le logement, et les contacts électriques du cylindre sont alors mis sous tension uniquement lorsqu'une insertion complète de l'extrémité dans le logement de la borne est détectée.

Les risques d'électrocution par contact avec le cylindre sous tension sont alors minimisés.

Le cadre peut notamment être réalisé d'une seule pièce en métal par moulage.

Le cadre est alors particulièrement solide car monobloc, et ne présentant pas de soudures, contrairement aux cadres en tubulures assemblées.

L'extrémité du cadre peut comporter un couvercle fermant la face supérieure du logement de la borne de recharge.

L'infiltration d'eau lors de la recharge est alors minimisée, tandis que le logement est maintenu aéré en l'absence d'un cycle attaché à la borne.

L'extrémité du cadre peut être de section rectangulaire, les saillies étant situées sur les faces latérales de la section rectangulaire.

Les rainures peuvent présenter une ouverture évasée, formant guide à l'insertion des rails rectilignes.

En combinaison avec les ouvertures évasées, la borne peut présenter un socle, qui comprend une rampe permettant l'insertion des rails rectilignes dans les rainures même si le cycle a un pneumatique dégonflé ou crevé.

### Description sommaire des figures

D'autres avantages et caractéristiques de l'invention apparaîtront à la lecture de la description suivante des figures jointes, parmi lesquelles :
La figure 1 est une vue de côté de l'ensemble formé par le cycle électrique, ici un vélo, et la borne de recharge,
La figure 2 est une vue de côté de l'extrémité avant du cadre du vélo électrique,
La figure 3 est une vue de trois quarts avant du vélo électrique sans la borne de recharge,
La figure 4 est une vue de trois quarts arrière de la borne de recharge au niveau d'un boitier-connecteur avec le vélo électrique,
La figure 5 est une vue de trois quarts avant du vélo électrique connecté à la borne de recharge,
La figure 6 est une vue en coupe du vélo électrique et de la borne au niveau de la connexion entre les deux,
La figure 7 est une vue de trois quarts d'un mode de réalisation alternatif de boîtier de connexion,
La figure 8 est une vue de trois quarts d'un mode de réalisation d'un ensemble formé de plusieurs bornes et cycles électriques associés.

Les exemples sont donnés à titre illustratif et non limitatif. D'autres modes de réalisation de l'invention sont aisément obtenus par des variations du modes de réalisation représenté.

### Description détaillée

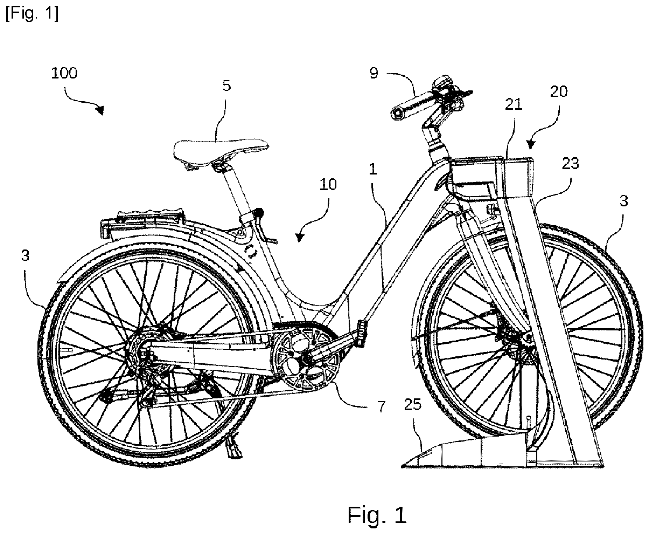

La figure 1 est une représentation en vue de côté d'un cycle électrique 10 et d'une borne 20 de recharge du vélo électrique 10, formant un ensemble 100 vélo électrique et borne de recharge.

Le cycle électrique 10 est ici un vélo électrique, comportant un cadre 1, portant des roues 3, une selle 5, un pédalier à assistance électrique 7 et un guidon 9.

La borne 20 comporte un boitier-connecteur 21, porté par des montants 23 situés de part et d'autre de la roue 3 avant du vélo 10, et un socle 25 ancré au sol. Le boîtier connecteur 21 vient notamment de matière avec les montants 23 pour plus de solidité.

Selon des variantes, le cycle électrique 10 peut être, en alternative au vélo représenté et discuté ci-après, un tricycle, un quadricycle, un tandem, un vélo cargo à porte charge, une trottinette ou tout autres véhicules de micromobilité. La borne 20 peut présenter une architecture différente, par exemple le boitier-connecteur 21 peut être porté par une barre transversale, un seul montant, ou un mur ou muret.

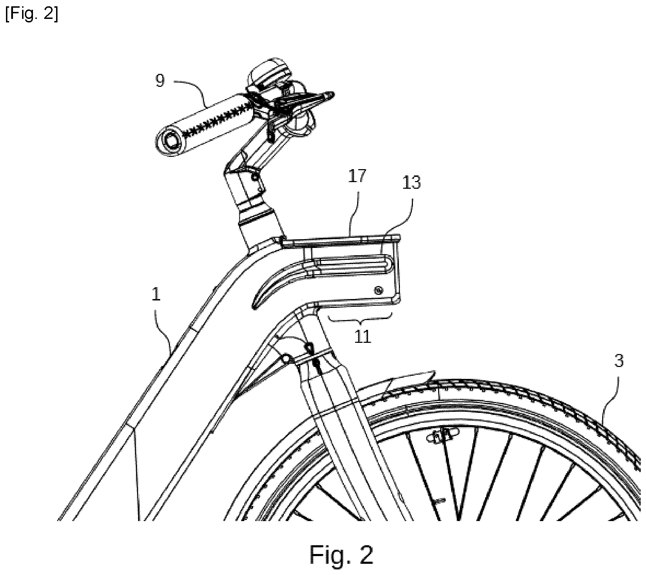

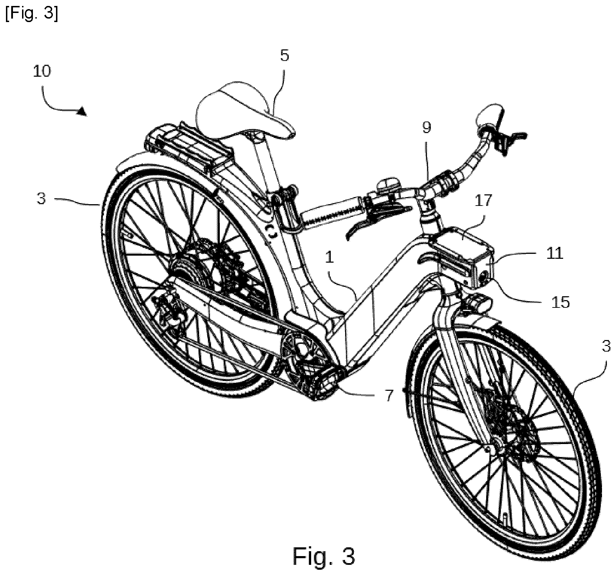

La figure 2 est une vue de côté partielle du vélo électrique 10 seul, au niveau de l'extrémité 11 avant du cadre 1. La figure 3 montre le vélo électrique 10 seul, en vue de trois quarts avant.

L'extrémité 11 du cadre 1 est de section rectangulaire ou carrée, avec un segment final rectiligne sensiblement horizontal, en considérant le vélo 10 sur un sol plat et horizontal. Au niveau de ce segment final, le cadre 1 présente sur ses faces latérales de l'extrémité des rails rectilignes 13.

L'extrémité rectiligne 11 comportant une longueur rectiligne supérieure à 5 cm, voire supérieure à 8 voire jusqu'à 20cm, et est section constante, ici en particulier rectangulaire ou carrée, mais plus généralement non invariante par rotation (polygonale, ovale, etc.) ce qui permet, une fois le cycle 10 connecté à la borne 20, de le bloquer en rotation pour empêcher l'arrachage par torsion.

Par non invariante par rotation on entend ici des sections qui sont substantiellement différentes d'un cercle, afin de bloquer en torsion l'extrémité rectiligne 11 dans le logement 27 une fois insérée. Par exemple, la section peut être ovale, avec une excentricité supérieure à 0,5 voire 0,7, ovoïde ou présenter au moins une face plane (section en demi-cercle ou cercle tronqué, etc.), un coin ou toute autre déformation du cercle autre qu'une simple homothétie.

La section de l'extrémité rectiligne 11 est notamment de diagonale ou de longueur des côtés supérieure à 8 cm jusqu'à 12 voire 15 cm.

Les rails rectilignes 13 viennent de matière avec le cadre 1 et présentent une extension radiale supérieure à 8mm, voire 10mm, idéalement 12mm, tout en s'étendant sur toute la longueur rectiligne de l'extrémité rectiligne 11, voire au-delà sur au moins une dizaine de centimètres voire plus pour une meilleure prise de force. Notamment, deux faces latérales sensiblement verticales de la section carrée de l'extrémité rectiligne 11 portent les rails 13, lesdits rails 13 s'étendant horizontalement de part et d'autre du cadre 1.

Du fait de l'insertion de la roue 3 entre les montants 23, le boîtier connecteur 21 est situé verticalement, une fois le cycle 10 branché, au-dessus du moyeu de la roue avant 3, voire légèrement derrière ledit moyeu. Il en résulte un raccourcissement du levier formé par le cadre 1.

La roue avant 3 est alors coincée entre les montants 23, notamment au niveau d'une arche supérieure contre laquelle elle vient en appui, ce qui renforce le blocage en rotation de l'avant du cycle 10.

Le cadre 1 se termine, au niveau de l'extrémité 11 en une surface plane, portant un logement tubulaire 15 formant prise d'un système prise-fiche.

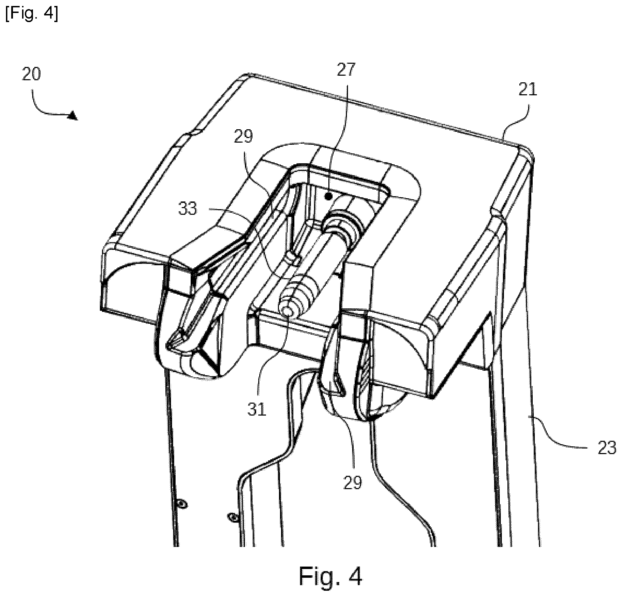

La figure 4 est une vue de trois quarts depuis le haut du boitier-connecteur 21 de la borne 20.

Le boitier-connecteur 21 de la borne 20 comporte un logement 27, de forme complémentaire au segment droit de l'extrémité 11 du cadre 1. Le logement 27 comporte deux rainures 29 en creux, dimensionnées et disposées de sorte à accueillir les rails rectilignes 13.

Notamment, les rainures 29 présentent une ouverture évasée, pour aider à l'insertion des rails rectilignes 13. Les rainures 29 et les rails rectilignes 13 définissent une direction d'insertion à laquelle ils sont parallèles, ici en particulier sensiblement horizontale.

Le socle 25 de la borne 20 présente en outre une rampe, dans laquelle vient rouler la roue 3 avant lors de l'insertion de l'extrémité 11 du cadre 1 dans le logement du boîtier-connecteur 21.

La rampe du socle 25 soulève alors la roue 3 avant du cycle 10 lors de son branchement. La combinaison de cette rampe du socle 25 et des ouverture évasées des rainures 29 permet alors de connecter le cycle 10 même si celui-ci à un pneumatique dégonflé ou crevé, sans que l'utilisateur ait à le soulever.

Dans le logement 27 est disposé un cylindre 31, parallèle aux rainures 29, et inséré dans le logement tubulaire 15 de l'extrémité 11 du cadre 1 du vélo 10 lorsqu'elle est insérée dans le logement 27 de la borne 20.

La borne de recharge 20 comporte un logement 27 configuré pour accueillir la totalité de la longueur rectiligne de l'extrémité 11 du cadre 1 portant les rails rectilignes 13. Le logement 27 présentant des rainures 29 ajustées aux rails rectilignes 13 sur toute la longueur rectiligne de l'extrémité 11.

Il en résulte un verrouillage fort du cycle 10 dans la borne 20, ces deux éléments formant alors un tout, mécaniquement solidaire et résistant à l'arrachage, notamment par action de levage, rotation ou torsion de l'arrière du cycle 10.

Le cylindre 31 forme ainsi la fiche complémentaire de la prise portée par l'extrémité 11 du cadre 1 sous forme de logement tubulaire 15 complémentaire. Le cylindre 31 porte notamment des contacts électriques 33, ici annulaires, qui sont mis sous tension une fois l'extrémité 11 du cadre 1 insérée dans le logement 27.

L'extrémité 11 du cadre 1 et le logement 27 comportent avantageusement un détecteur d'insertion complète de l'extrémité 11 dans le logement 27, par exemple via un aimant dans l'extrémité du cadre 1 et un capteur magnétique disposé dans le logement 27, la mise sous tension des contacts électriques 33 étant conditionnée par la détection d'une insertion complète afin d'éviter une électrocution de l'utilisateur.

Les rails rectilignes 13 et les rainures 29 ont notamment une longueur de plusieurs centimètres voire dizaines de centimètres, typiquement de 10 à 30cm. Ainsi, une fois les rails rectilignes 13 insérées dans les rainures 29, les efforts développés par le soulèvement de l'arrière du vélo électrique 10 sont répartis sur la totalité de la longueur desdites rails rectilignes 13 et rainures 29, et transmis directement à la borne 20, et notamment au socle 25 de celle-ci.

L'arrachage par soulèvement, vrillage ou torsion de l'arrière du vélo 10 est ainsi rendu plus difficile voire impossible sans engin, du fait d'une solidarisation forte du vélo 10 et de la borne 20.

Le cadre 1 peut notamment être réalisé d'une seule pièce par moulage, notamment par moulage à moule perdu en sable. Le cadre 1 est alors à section carrée ou rectangulaire et creux sur toute sa longueur et peut accueillir les batteries, moteurs et l'électronique de gestion de l'alimentation et du rechargement.

Le vélo 20 ainsi obtenu présente une structure monobloc solide, rendant sa dégradation plus difficile.

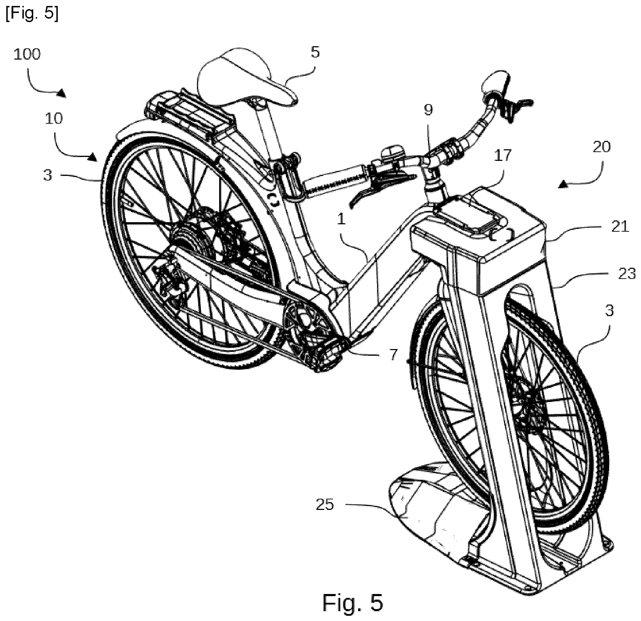

La figure 5 est une vue de trois quarts depuis l'avant de l'ensemble 100 formé par le vélo électrique 10 et la borne 20, une fois le vélo électrique 10 connecté à la borne 20.

Notamment l'extrémité 11 du cadre 1 porte un couvercle 17, qui ferme le logement 27 de la borne 20. En le munissant sur ses bords de joints polymère, l'infiltration d'eau est limitée, notamment lorsque l'insertion de l'extrémité 11 du cadre 1 est complète dans le logement 27, et que les contacts électriques 33 du cylindre 31 sont mis sous tension.

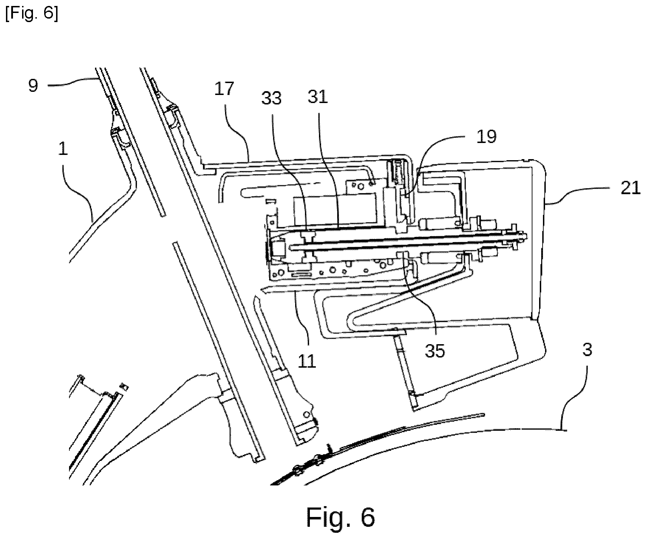

La figure 6 est une vue en coupe de l'extrémité 11 du cadre 1 ainsi que du boitier-connecteur 21 de la borne 20, une fois l'insertion complète effectuée.

Le cylindre 31 est notamment intégralement contenu dans le logement tubulaire 15 de l'extrémité 11 du cadre 1. Ses contacts électriques 33 alimentent alors un circuit de charge (non représenté) de la batterie du vélo électrique 10.

Pour empêcher le retrait du vélo électrique 10 de la borne 20 sans autorisation, le cylindre des moyens de blocage en translation de l'extrémité 11 dans le logement 27 de la borne 20 sont prévus.

Notamment, le cylindre 31 comporte ici un retrait annulaire 35, et dans le logement tubulaire 15 de l'extrémité 11 du cadre 1 se trouve un pêne 19, mobile entre une position de verrouillage, dans laquelle il entre en prise avec le retrait annulaire 35 du cylindre 31, et une position de libération, dans laquelle il est rétracté.

La libération du cylindre 31, et donc du vélo électrique 10 est alors soumise, par exemple, au paiement d'un abonnement ou à la présentation d'un badge ou d'une carte ou clé valide.

La détection de l'insertion complète de l'extrémité 11 du cadre 1 dans le logement 27 enclenche alors le basculement en position de verrouillage du pêne 19, et peut marquer la fin d'un temps d'emprunt du vélo électrique 10 facturé.

Le cylindre 31 et le logement tubulaire 15 l'accueillant peuvent notamment comporter des lignes de communication logique entre la borne 20 et le vélo électrique 10, pour, par exemple, identifier le vélo électrique 10 et donc l'utilisateur, communiquer le niveau de charge de la batterie etc.

En alternative, le vélo 10 et la borne 20 peuvent comporter des moyens de communication déclenchés et appairés lorsqu'une insertion complète de l'extrémité 11 dans le logement 27 est détectée par exemple par radio, Bluetooth etc.

Des modes de réalisation alternatifs, non représentés, peuvent comporter deux ou plus cylindres 31 et logements tubulaires 15, les cylindres 31 portant par exemple chacun un contact unique, ou bien le ou les cylindres 31 peuvent être intégrés à l'extrémité 11 du cadre 1.

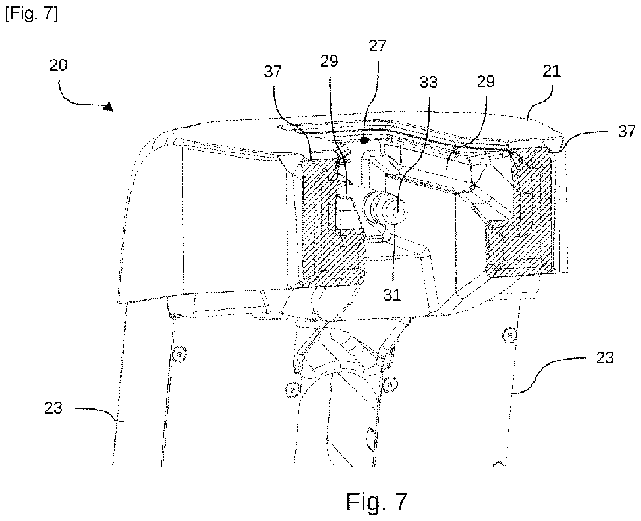

La figure 7 est une représentation en vue de trois quarts d'un autre mode de réalisation de boîtier connecteur 21 pour borne de recharge 20. Dans le mode de réalisation représenté, le boîtier présente sur sa face avant, sur laquelle débouchent les rainures 29, des amortisseurs polymère 37.

Ces amortisseurs 37 peuvent notamment prolonger l'ouverture évasée des rainures 29, là où les rails 13 risquent d'être amenés à entrer en collision avec le boîtier connecteur 21.

Les amortisseurs 37 sont notamment réalisés en caoutchouc, et réduisent fortement les chocs lors de l'insertion de l'extrémité 11 du cadre 1 du cycle 10 dans la borne 20.

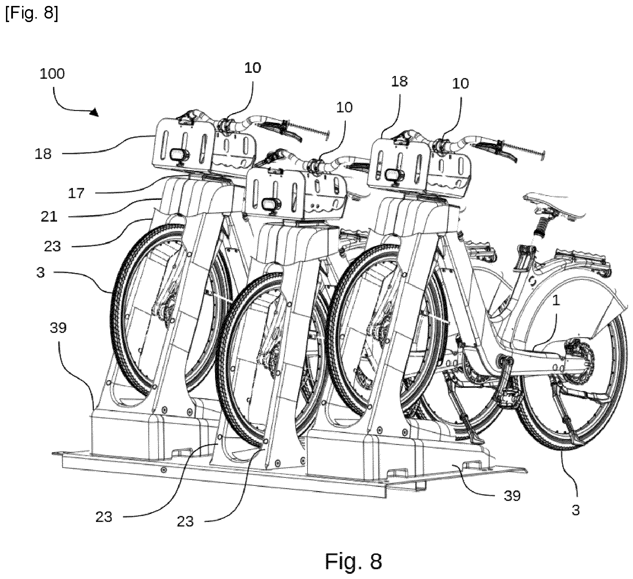

La figure 8 montre un mode de réalisation particulier d'ensembles 100 cycle 10 et bornes 20, avec plusieurs stations de charge, matérialisées chacune par un boîtier connecteur 21 porté par deux montants 23, configurées pour accueillir chacune un cycle 10.

Les stations de charge sont disposées en ligne, et une station sur deux est surélevée par la présence d'une embase 39 formant tremplin, située sous les montants 23.

Une station de charge sur deux est équipée d'une embase 39, de sorte que les boîtiers connecteurs 21 sont disposés en quinconce sur deux hauteurs différentes.

Les stations de charge peuvent alors être rapprochées dans le sens transverse, perpendiculaire à l'axe longitudinal des cycles 10 connectés, ce qui permet, pour une même surface au sol, d'accueillir plus de cycles 10.

Les cycles 10 présentent en outre des paniers 18, situés à l'avant sur le couvercle 17 qui referme le logement 27.

L'extrémité 11 du cadre 1 insérée dans le logement 27 est ici, dans les exemples précédemment discutés de vélo électrique, l'extrémité avant. Avec d'autres types de cycles électriques 10, l'extrémité 11 du cadre 1 insérée peut être l'extrémité arrière, notamment s'il s'agit d'un vélocargo qui présente un bac ou un siège enfant à l'avant du vélo 10.

L'ensemble 100 vélo électrique 10 et borne de recharge 20 selon l'invention permet ainsi de solidariser fortement le cadre 1 du vélo électrique 10 à la borne de recharge 20, et donc de prévenir la destruction par arrachage du vélo électrique 20. La durée de vie de l'ensemble 100 est ainsi augmentée, ce qui augmente aussi la rentabilité du service de vélopartage, et peut donc permettre la diffusion de cette alternative économique et écologique à la voiture en ville.

## Revendications

1. Ensemble (100) cycle électrique (10) et borne de recharge (20), comportant :
- un cycle électrique (10), présentant un cadre (1) et une prise électrique (15) pour la recharge d'une batterie,
- une borne de recharge (20) du cycle électrique (10), ancrée et alimentée en courant électrique, présentant une fiche (31) complémentaire de la prise électrique (15) du cycle électrique (10), insérée dans ladite prise électrique (15) lorsque le cycle électrique (10) est attaché à la borne de recharge (20),
**caractérisé en ce que** :
- le cadre (1) comporte une extrémité (11) rectiligne portant la prise (15), avec, sur des faces latérales de l'extrémité (11) des rails rectilignes (13) parallèles à un sens d'insertion par translation de l'extrémité (11) dans la borne de recharge (20), l'extrémité rectiligne (11) comportant une longueur rectiligne supérieure à 8 cm, de section constante non invariante par rotation,
les rails rectilignes (13) venant de matière avec le cadre et présentant une extension radiale supérieure à 8mm et s'étendant sur tout la longueur rectiligne de l'extrémité rectiligne (11),
- la borne de recharge (20) comporte un logement (27) configuré pour accueillir la totalité de la longueur rectiligne de l'extrémité (11) du cadre (1) portant les rails rectilignes (13), présentant des rainures (29) ajustées aux rails rectilignes (13) sur la longueur rectiligne de l'extrémité (11) et dans lesquelles viennent s'insérer les rails rectilignes (13) du cadre (1), et des moyens de blocage en translation (19, 35) de l'extrémité (11) dans la borne de recharge (20) lorsqu'elle est insérée dans le logement (27) de la borne de recharge (20) pour attacher le cycle électrique (10) à la borne de recharge (20).

2. Ensemble selon la revendication 1, **caractérisé en ce que** la prise comporte un cylindre (31) portant des contacts électriques (33), et la fiche un logement tubulaire (15) pour le cylindre (31), le cylindre (31) étant inséré dans le logement tubulaire (15) lors de l'insertion de l'extrémité (11) du cadre (1) dans le logement de la borne de recharge (20).

3. Ensemble selon la revendication 2, **caractérisé en ce que** le cylindre (31) comporte un retrait (35), et le logement tubulaire (15) comporte un pêne (19) mobile entre une position de verrouillage dans laquelle il entre en prise avec le retrait (35), et une position de libération dans laquelle il est escamoté, formant moyens de blocage en translation de l'extrémité (11) dans le logement (27) de la borne de recharge (20).

4. Ensemble selon la revendication 2 ou 3, **caractérisé en ce que** le cylindre (31), le logement tubulaire (15), les rainures (29) et les rails rectilignes (13) sont sensiblement horizontaux lorsque le cycle électrique (10) est disposé sur un sol plat.

5. Ensemble selon l'une des revendications 2 à 4, **caractérisé en ce que** le cadre (1) et la borne de recharge (20) comportent des moyens de détection d'insertion complète de l'extrémité (11) du cadre (1) dans le logement (27), et **en ce que** les contacts électriques (33) du cylindre (31) sont mis sous tension lorsqu'une insertion complète de l'extrémité (11) dans le logement (27) de la borne (20) est détectée.

6. Ensemble selon l'une des revendications précédentes, **caractérisé en ce que** le cadre (1) est réalisé d'une seule pièce en métal par moulage.

7. Ensemble selon l'une des revendications précédentes, **caractérisé en ce que** l'extrémité (11) du cadre (1) est de section polygonale, en particulier rectangulaire ou carrée.

8. Ensemble selon la revendication précédente, **caractérisé en ce que** l'extrémité (11) du cadre (1) présente deux faces latérales sensiblement verticales portant les rails (13).

9. Ensemble selon l'une des revendications précédentes, **caractérisé en ce que** l'extrémité (11) du cadre (1) comporte un couvercle (17) fermant la face supérieure du logement (27) de la borne de recharge (20).

10. Ensemble selon l'une des revendications précédentes, **caractérisé en ce que** l'extrémité (11) du cadre est de section rectangulaire, les saillies étant situées sur les faces latérales de la section rectangulaire.

11. Ensemble selon l'une des revendications précédentes, **caractérisé en ce que** les rainures (29) présentent une ouverture évasée, formant guide à l'insertion des rails rectilignes (13).

12. Ensemble selon la revendication 11, **caractérisé en ce que** la borne (20) comporte en outre un socle (25) présentant une rampe pour la roue (3) avant du cycle électrique (10) permettant l'insertion de l'extrémité (11) du cadre (1) dans le logement (27) même si le cycle électrique (10) a un pneumatique dégonflé ou crevé.
